# EUROPEAN PATENT APPLICATION

(11) **EP 2 664 770 A2**
(43) Date of publication of application: **20.11.2013**
(21) Application number: 12734503.1
(22) Date of filing: 11.01.2012
(51) Int. Cl.: F02D 11/02, F02D 41/04, F02D 29/00, B60W 30/14

(54) **SYSTEM FOR CONTROLLING NUMBER OF REVOLUTION FOR ENGINE OF FARM WORK VEHICLE HAVING ELECTRONIC ENGINE ATTACHED THEREON AND METHOD FOR CONTROLLING THEREOF**

(30) Priority: 11.01.2011 KR 20110002688
(71) Applicant: Daedong Industrial co. Ltd., Dalsung-Gun, Daegu 635-806 (KR)
(72) Inventor: PARK, Sang Rae, Changnyeong-gun Gyeongsangnam-do 635-806 (KR); KWON, O Hyun, Changnyeong-gun Gyeongsangnam-do 635-806 (KR)
(74) Representative: Caspary, Karsten
(86) International application number: PCT/KR2012/000276
(87) International publication number: WO 2012/096514

(57) **Abstract**

Disclosed is a system for controlling the number of revolution for an engine of a farm work vehicle having an electronic engine attached thereon. The system for controlling the number of revolution according to an embodiment of the present invention comprises: a foot accelerator pedal sensor for detecting the maneuvering location of a foot accelerator pedal; a hand accelerator lever sensor for detecting the maneuvering location of a hand accelerator lever; an engine cruise control (ECC) on/off switch onto which an operation command is inputted for maintaining the number of revolution for the engine at a fixed speed; and an engine control unit (ECU) for controlling the number of revolution for the engine at a number of revolution designated according to an operation signal of the ECC on/off switch, wherein the system is configured to execute a cruise mode for maintaining the number of revolution for the engine constant according to the operation signal of the ECC on/off switch when the execution conditions are satisfied, and maintain the number of revolution for the engine to be constant at a set number of revolution after the ECU selects the bigger value from the number of revolution for the engine set according to the foot accelerator pedal and the hand accelerator lever, when the cruise mode is executed. Representative Drawing: FIG. 3

## Description

### [Technical Field]

The present invention relates to an engine RPM control system and method and, more particularly, to a system and method for controlling engine RPM of an agricultural vehicle equipped with an electronic engine.

### [Background Art]

An agricultural vehicle is structurally the same as a typical car but is equipped with a powerful engine to provide good traction. Thus, the agricultural vehicle is mainly used for agricultural purposes, and a working machine (e.g., rotary machine) suitable for seed covering or land leveling work may be selectively attached to the rear of the agricultural vehicle if necessary for the agricultural purposes.

In the agricultural vehicle, the torque for driving a working machine is generated from a main engine of the agricultural vehicle. The speed of the torque generated in the engine is changed to a predetermined RPM through a transmission case (not shown) and transmitted to the working machine through a power takeoff (PTO) shaft projecting from the rear of the agricultural vehicle. As such, the working machine mounted on the conventional agricultural vehicle is driven by the output of the engine, and thus the torque also varies in proportion to a change in the output of the engine.

Accordingly, when a seed covering or land leveling work is performed in a state where the working machine is driven, if a significant load is applied to the engine due to the road environment (slope, mud, etc.) during the work, the engine RPM decreases in proportion to the amount of load, which also results in a decrease in the RPM of the working machine, thus reducing the performance of the work. Therefore, it is impossible to ensure uniform work quality over the entire workplace even when the work is performed while maintaining the engine RPM constant.

### [Disclosure]

### [Technical Problem]

Accordingly, the present invention has been made to solve the above-described problems, and an object of the present invention is to provide a system and method for controlling engine RPM of an agricultural vehicle equipped with an electronic engine, which can maintain the engine RPM constant even when a load is applied to the engine due to the road environment (slope, mud, etc.) during work.

### [Technical Solution]

To accomplish the above objects of the present invention, according to an aspect of the present invention there is provided a system for controlling engine RPM of an agricultural vehicle equipped with an electronic engine, the system comprising: a foot accelerator pedal sensor which detects an operation position of a foot accelerator pedal; a hand accelerator lever sensor which detects an operation position of a hand accelerator lever; an engine cruise control (ECC) on/off switch to which an operation command for maintaining the engine RPM at a fixed speed is input; and an engine control unit (ECU) which controls the engine RPM at a predetermined RPM in response to the operation signal of the ECC on/off switch, wherein if an execution condition is satisfied, a cruise mode for maintaining the engine RPM constant is executed in response to the operation signal of the ECC on/off switch, and wherein if the cruise mode is executed, the ECU selects a higher value from engine RPMS set by the foot accelerator pedal and the hand accelerator lever and maintains the engine RPM constantly at the selected RPM.

In an embodiment, the execution condition to switch to the cruise mode may include: a case where the ECC on/off switch is an ON state; a case where a brake pedal switch and a clutch pedal switch are in an OFF state; and a case where the engine rotates within a predetermined RPM range.

Here, the predetermined RPM may be equal to or greater than 1500 and equal to or less than 2600 (1500≤RPM≤2600).

In this embodiment, the system of the present invention may further comprise an RPM control switch for increasing or decreasing the engine RPM when the cruise mode is executed as the execution condition is satisfied.

Moreover, the system of the present invention may further comprise a lamp for indicating a switch ON state when the ECC on/off switch is in an ON state.

Furthermore, if a cruise mode cancellation condition is satisfied during the execution of the cruise mode, the cruise mode under execution may be cancelled, and the control for maintaining the engine RPM constant may be stopped.

In this case, the cruise mode cancellation condition may include: a normal stop condition in which the ECC on/off switch is turned OFF; and an automatic stop condition in which the brake pedal switch or the clutch pedal switch is in an ON state as a brake pedal or a clutch pedal is operated or the engine RPM exceeds the predetermined RPM range.

To accomplish the above objects of the present invention, according to another aspect of the present invention there is provided a method for controlling engine RPM of an agricultural vehicle equipped with an electronic engine, the method comprising: an input step of setting an engine cruise control (ECC) on/off switch to ON by a user's input; a cruise mode switch step in which if the ECC on/off switch is set to ON, an engine control unit (ECU) determines whether a cruise mode execution condition is satisfied and, if satisfied, switches to a cruise mode for maintaining the engine RPM constant; a cruise mode execution step in which when switching to the cruise mode, the ECU compares engine RPMS set by a foot accelerator pedal and a hand accelerator lever before switching to the cruise mode, selects a higher value from the engine RPMS, and maintains the engine RPM constantly at the selected RPM; and a cruise mode cancellation step in which in the event of a situation that satisfies a cruise mode cancellation condition during the execution of the cruise mode, the ECU cancels the cruise mode.

Here, the method of the present invention may further comprise an engine RPM setting step of increasing or decreasing the engine RPM by operation of an RPM control switch during the execution of the cruise mode.

### [Advantageous Effects]

According to a system and method for controlling engine RPM of an agricultural vehicle equipped with an electronic engine in accordance with embodiments of the present invention, it is possible to maintain the engine RPM constantly at a higher RPM selected from main signals of two accelerator pedals within a maximum allowable torque range even when a load is applied to the engine due to the road environment (slope, mud, etc.) during work.

That is, a working machine, for example, a rotary machine, attached to the agricultural vehicle can maintain a constant RPM even when the work is performed under load condition, and thus it is possible to ensure uniform work quality even when a seed covering work is performed on an inclined workplace.

Moreover, it is possible to appropriately control the engine RPM to fit the work environment by means of an RPM control switch even when the work is performed in the cruise mode, and thus the working machine can be driven at a constant RPM suitable for the work environment, thus improving the efficiency and performance of the work.

### [Description of Drawings]

FIG. 1 is a block diagram schematically showing the overall configuration of a system for controlling engine RPM of an agricultural vehicle in accordance with an embodiment of the present invention.
FIG. 2 is a block diagram showing the sequence of an engine RPM control process implemented by the system shown in FIG. 1.
FIG. 3 is a flowchart showing an engine RPM control process implemented by the system of the present invention.

### Description of Reference Numerals

10: foot accelerator pedal
12: foot accelerator pedal sensor
20: hand accelerator lever
22: hand accelerator lever sensor
30: ECC on/off switch
40: engine control unit (ECU)
80: fuel injection unit
90: engine
100: working machine

### [Mode for Invention]

Hereinafter, preferred embodiments of the present invention will be described in detail with reference to the accompanying drawings.

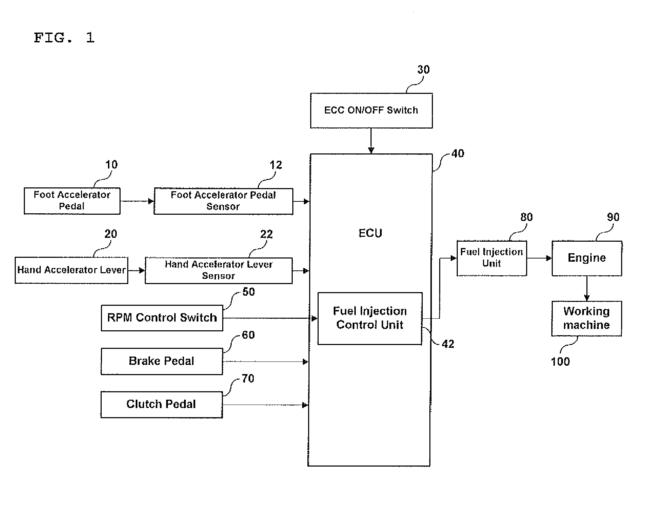

FIG. 1 is a block diagram schematically showing the overall configuration of a system for controlling engine RPM of an agricultural vehicle in accordance with an embodiment of the present invention.

Referring to FIG. 1, the system of the present invention comprises an engine cruise control (ECC) on/off switch 30, which switches to a cruise mode for maintaining the RPM of an engine 90 constant, and an engine control unit (ECU) 40 which controls the RPM of the engine 90 at an RPM set by an operation signal of the ECC on/off switch 30.

An execution command for maintaining the RPM of the engine 90 at a fixed speed is input through the ECC on/off switch 30. If a cruise mode execution command is input through the ECC on/off switch 30, the ECU 40 determines whether a corresponding execution condition is satisfied and, if it is determined that the corresponding execution condition is satisfied, outputs a command signal for maintaining the RPM of the engine 90 at a predetermined RPM.

The rotational power output from the engine 90 is transmitted to a pair of front wheels and a pair of rear wheels through a clutch (not shown) for controlling the rotational power and a transmission (not shown) accommodated in a transmission case (not shown) commonly used as a frame and, at the same time, transmitted to a working machine 100 through a power takeoff (PTO) shaft projecting from the rear of the transmission case.

The engine 90 is provide with a common rail type fuel injection unit 80 which electronically controls the amount of fuel injected or the injection timing, and the operation of the fuel injection unit 80 is controlled in response to an RPM control signal of a fuel injection control unit 42. That is, the RPM of the engine 90 may be controlled at a predetermined value through the control of the fuel injection unit 80 in response to a control command of the fuel injection control unit 42.

The fuel injection control unit 42 is electrically connected to a foot accelerator pedal sensor 12 and a hand accelerator lever sensor 22 which detect the operation position of a foot accelerator pedal 10 and a hand accelerator lever 20. Accordingly, the fuel injection control unit 42 calculates and outputs a signal for fuel injection control based on the detection value of the pedal operation position input from the foot accelerator pedal sensor 12 or the hand accelerator lever sensor 22.

When the ECC on/off switch 30 is set to ON by a user' setting, the ECU 40 outputs a command signal for controlling the RPM of the engine 90 at a predetermined RPM in response to the operation signal, and the RPM control related-command signal output from the ECU 40 is transmitted to the fuel injection unit 80 through the fuel injection control unit 42.

In detail, when a signal for switching to a cruise mode for maintaining the RPM of the engine 90 at a fixed speed is input through the ECC on/off switch 30, the ECU 40 first determines whether a cruise mode execution condition is satisfied and, if it is determined that the execution condition is satisfied, executes the cruise mode for maintaining the RPM of the engine 90 constant.

The execution condition for switching to the cruise mode may include a case where the ECC on/off switch 30 is in an ON state, a case where a brake pedal switch (not shown) and a clutch pedal switch (not shown) are in an OFF state, i.e., a running state without the operation of a brake pedal 60 and a clutch pedal 70, and a case where the engine 90 rotates within a predetermined RPM range (1500≤RPM≤2600).

When the cruise mode is executed as the cruise mode execution condition is satisfied, the ECU 40 compares engine RPMs set by the foot accelerator pedal and the hand accelerator lever before the execution of the cruise mode, selects a higher value from the engine RPMs set by the foot accelerator pedal and the hand accelerator lever, and maintains the engine RPM constantly at the selected RPM.

For example, before the execution of the cruise mode, if the foot accelerator pedal 10 is in an operation position where the engine 90 rotates at 2000 RPM and if the operation position of the hand accelerator lever 20 is set to rotate the engine 90 at 2300 RPM, the ECU 40 maintains the RPM of the engine 90 at an RPM, set by the hand accelerator lever 20, i.e., 2300 RPM.

If the RPM of the engine 90 can be appropriately controlled to fit the work environment in the cruise mode where the engine 90 rotates at a constant RPM, the working machine 100 can be driven constantly at an RPM suitable for the work environment, thus improving the efficiency of the work. Therefore, it is possible to configure the system to increase and decrease the RPM of the engine 90 by the user's intentional operation in a state where the cruise mode is executed as the execution condition is satisfied.

In order to implement the system to increase and decrease the engine RPM in the cruise mode, it is necessary to employ an RPM control switch 50 which is electrically connected to the fuel injection control unit 42. Here, the RPM control switch 50 may comprise an RPM UP/DOWN switch (or button or lever) for increasing and decreasing the RPM.

When the engine RPM is intentionally changed through the operation of the RPM control switch 50 in the cruise mode, it is preferred to set up a program in advance such that the RPM of the engine 90 can be increased or decreased by 50 RPM, for example, for each operation of the RPM control switch 50 by the user.

Meanwhile, a lamp (not shown) which indicates the connection state of the ECC on/off switch may be provided at a proper position of a driver's seat such that the driver or worker can easily check the on/off state of the ECC on/off switch with the naked eye when the ECC on/off switch is set to ON to switch to the cruise mode.

In the event of a situation related to the cancellation of the cruise mode while the cruise mode is executed by the operation of the ECC on/off switch and the determination of the ECU, the ECU 40 outputs a command signal for cancelling the cruise mode under execution, and thus the above-mentioned cruise mode for maintaining the engine RPM constant may be stopped.

The condition for cancelling the cruise mode may be divided into a normal stop condition in which the user intentionally turns off the ECC on/off switch 30 and an automatic stop condition in which the ECU 40 automatically cancel the cruise mode based on a signal from a sensor which detects the driving condition of the agricultural vehicle.

Among them, the automatic stop condition may include a case where the brake pedal switch or the clutch pedal switch, which detect the operation state of the brake pedal 60 or the clutch pedal 70 during driving or working, is turned on and a case where the RPM of the engine 90 exceeds the predetermined RPM range.

An engine RPM control process which may be implemented by the system for controlling the engine RPM having the above-described configuration will be described below.

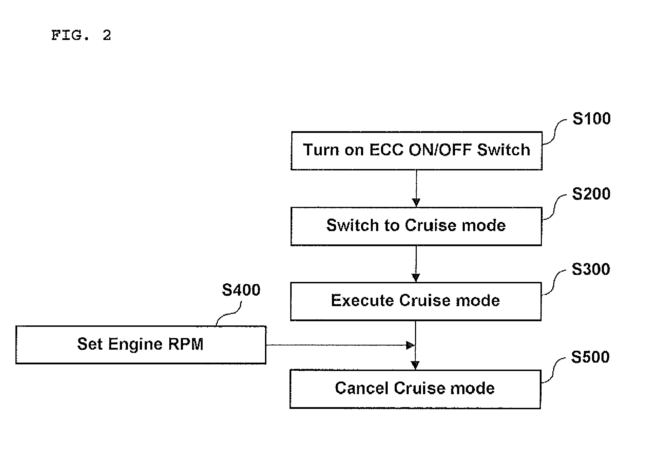

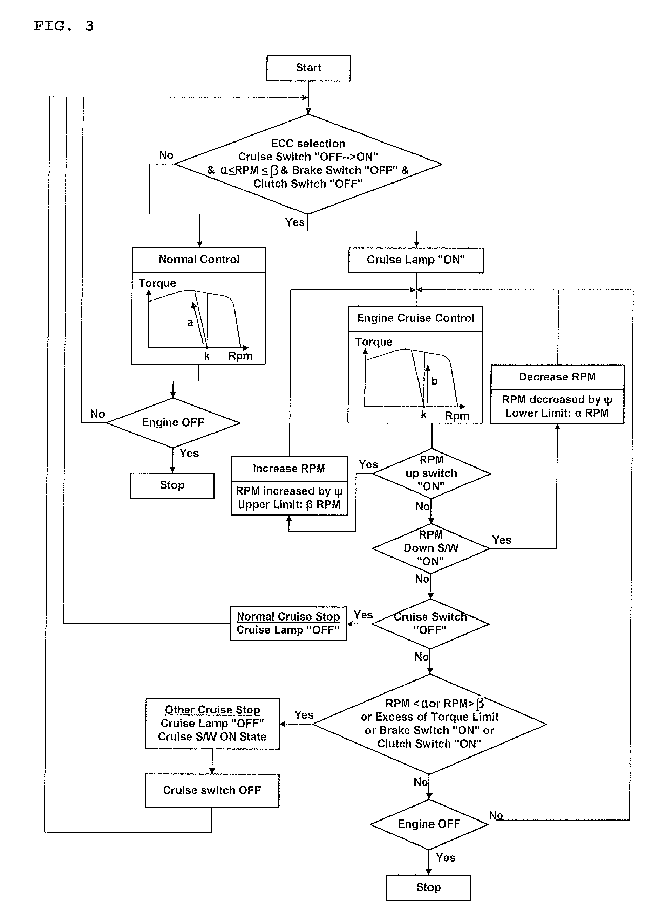

FIG. 2 is a block diagram showing the sequence of an engine RPM control process implemented by the system shown in FIG. 1, and FIG. 3 is a flowchart showing an engine RPM control process implemented by the system of the present invention.

Referring to FIG. 2, a control method in accordance with another aspect of the present invention comprises an input step (S100) of setting the ECC on/off switch to ON, a cruise mode switch step (S200), a cruise mode execution step (300) and a cruise mode cancellation step (S400), and the cruise mode execution step (S300) includes an engine RPM setting step (S400) of increasing or decreasing the engine RPM.

The engine RPM control process will be described in more detail with reference to FIG. 3.

Referring to FIG. 3, if the ECC on/off switch is set to ON by the user's input, the ECU first determines whether the state of the vehicle satisfies the cruise mode execution condition. Here, the cruise mode execution condition has been previously described in detail, and thus a repetitive description thereof will be omitted.

If the ECC on/off switch is in an ON state and if the cruise mode execution condition is satisfied, a lamp related to the cruise mode execution is lighted, and the switch to the cruise mode for maintaining the engine RPM is made by the ECU.

If the switch to the cruise mode is made in the above manner, the ECU compares the set engine RPMs depending on the positions of the foot accelerator pedal and the hand accelerator lever before the switch to the cruise mode, selects a higher value from the set engine RPMs, and executes the cruise mode for maintaining the engine RPM constantly at the selected RPM.

During the execution of the cruise mode, the change in the position of the foot accelerator pedal or the hand accelerator lever is ignored, and thus the control for maintaining the engine RPM constant is executed even when a load is applied to the engine due to the road environment (slope, mud, etc.) during work.

Moreover, during the execution of the cruise mode, if a signal related to a change in the engine RPM due to the operation of the RPM control switch is input, the engine RPM can be increased or decreased to a desired engine RPM in response to the operation of the RPM control switch.

Meanwhile, during the execution of the cruise mode, if the ECC on/off switch is set to OFF, if the brake or clutch is operated, or if the engine RPM exceeds the predetermined RPM range, a command signal related to the cancellation of the cruise mode is output through the ECU, and thus the cruise mode is cancelled and returned to a normal control mode.

In the normal control mode, the engine speed, i.e., the engine RPM can be controlled by the change in the position of the foot accelerator pedal or the hand accelerator lever in the same manner as the conventional method. Moreover, when the engine is stopped by the user's manipulation or other factors during the execution of the cruise mode, the cruise mode is automatically stopped, and even when the engine is restarted, the cruise mode is not automatically executed without the operation of the ECC on/off switch by the user.

### [Industrial Applicability]

As described above, according to the embodiments of the present invention, it is possible to maintain the engine RPM constantly at a higher RPM selected from main signals of two accelerator pedals within a maximum allowable torque range even when a load is applied to the engine due to the road environment (slope, mud, etc.) during work. Therefore, it is possible to prevent the engine RPM from decreasing during load operation, thus improving the efficiency of the work.

That is, the working machine, for example, a rotary machine, attached to the agricultural vehicle can maintain a constant RPM even when the work is performed under load condition, and thus it is possible to ensure uniform work quality even when a seed covering work is performed on an inclined workplace.

Moreover, it is possible to appropriately control the engine RPM to fit the work environment by means of the RPM control switch even when the work is performed in the cruise mode, and thus the working machine can be driven at a constant RPM suitable for the work environment, thus improving the efficiency and performance of the work.

The invention has been described in detail with reference to preferred embodiments thereof. However, it will be appreciated by those skilled in the art that changes may be made in these embodiments without departing from the principles and spirit of the invention, the scope of which is defined in the appended claims and their equivalents.

## Claims

1. A system for controlling engine RPM of an agricultural vehicle equipped with an electronic engine, the system comprising:
a foot accelerator pedal sensor which detects an operation position of a foot accelerator pedal;
a hand accelerator lever sensor which detects an operation position of a hand accelerator lever;
an engine cruise control (ECC) on/off switch to which an operation command for maintaining the engine RPM at a fixed speed is input; and
an engine control unit (ECU) which controls the engine RPM at a predetermined RPM in response to the operation signal of the ECC on/off switch,
wherein if an execution condition is satisfied, a cruise mode for maintaining the engine RPM constant is executed in response to the operation signal of the ECC on/off switch, and
wherein if the cruise mode is executed, the ECU selects a higher value from engine RPMS set by the foot accelerator pedal and the hand accelerator lever and maintains the engine RPM constantly at the selected RPM.

2. The system of claim 1, wherein the execution condition to switch to the cruise mode includes:
a case where the ECC on/off switch is an ON state;
a case where a brake pedal switch and a clutch pedal switch are in an OFF state; and
a case where the engine rotates within a predetermined RPM range.

3. The system of claim 2, wherein the predetermined RPM is equal to or greater than 1500 and equal to or less than 2600 (1500≤RPM≤2600).

4. The system of claim 1, further comprising an RPM control switch for increasing or decreasing the engine RPM when the cruise mode is executed as the execution condition is satisfied.

5. The system of claim 1, further comprising a lamp for indicating a switch ON state when the ECC on/off switch is in an ON state.

6. The system of claim 1, wherein if a cruise mode cancellation condition is satisfied during the execution of the cruise mode, the cruise mode under execution is cancelled, and the control for maintaining the engine RPM constant is stopped and switched to a normal control mode.

7. The system of claim 6, wherein the cruise mode cancellation condition includes:
a normal stop condition in which the ECC on/off switch is turned OFF; and
an automatic stop condition in which the brake pedal switch or the clutch pedal switch is in an ON state as a brake pedal or a clutch pedal is operated or the engine RPM exceeds the predetermined RPM range.

8. A method for controlling engine RPM of an agricultural vehicle equipped with an electronic engine, the method comprising:
an input step of setting an engine cruise control (ECC) on/off switch to ON by a user's input;
a cruise mode switch step in which if the ECC on/off switch is set to ON, an engine control unit (ECU) determines whether a cruise mode execution condition is satisfied and, if satisfied, switches to a cruise mode for maintaining the engine RPM constant;
a cruise mode execution step in which when switching to the cruise mode, the ECU compares engine RPMS set by a foot accelerator pedal and a hand accelerator lever before switching to the cruise mode, selects a higher value from the engine RPMS, and maintains the engine RPM constantly at the selected RPM; and
a cruise mode cancellation step in which in the event of a situation that satisfies a cruise mode cancellation condition during the execution of the cruise mode, the ECU cancels the cruise mode.

9. The method of claim 8, further comprising an engine RPM setting step of increasing or decreasing the engine RPM by operation of an RPM control switch during the execution of the cruise mode.
